(19) Europäisches Patentamt
European Patent Office
Office européen des brevets

(11) Veröffentlichungsnummer: **0 291 455 B1**

(12) **EUROPÄISCHE PATENTSCHRIFT**

(45) Veröffentlichungstag der Patentschrift: **30.11.94**

(51) Int. Cl.[5]: **C08J 9/10**, C08L 63/00, //(C08L63/00,61:06)

(21) Anmeldenummer: **88810285.2**

(22) Anmeldetag: **04.05.88**

Die Akte enthält technische Angaben, die nach dem Eingang der Anmeldung eingereicht wurden und die nicht in dieser Patentschrift enthalten sind.

# (54) Heissverschäumbares, heisshärtendes Epoxidharzgemisch.

(30) Priorität: **13.05.87 CH 1836/87**

(43) Veröffentlichungstag der Anmeldung:
**17.11.88 Patentblatt 88/46**

(45) Bekanntmachung des Hinweises auf die Patenterteilung:
**30.11.94 Patentblatt 94/48**

(84) Benannte Vertragsstaaten:
**DE GB NL SE**

(56) Entgegenhaltungen:
**EP-A- 0 006 535**
**EP-A- 0 204 658**
**FR-A- 2 011 957**
**FR-A- 2 280 666**
**GB-A- 2 055 843**

(73) Patentinhaber: **CIBA-GEIGY AG**
**Klybeckstrasse 141**
**CH-4002 Basel (CH)**

(72) Erfinder: **Diethelm, Hermann, Dr.**
**Grottenweg**
**CH-1711 Giffers (CH)**

EP 0 291 455 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein heissverschäumbares, heisshärtbares Epoxidharzgemisch, enthaltend als Härtungsmittel ein Novolak und als Treibmittel eine Verbindung, welche oberhalb von 100 °C unter Zersetzung Stickstoff abspaltet, die Verwendung des Epoxidharzgemisches zur Herstellung von Schaumstoffen sowie Verfahren zur Herstellung von Schaumstoffen.

Schaumstoffe auf Basis von Epoxidharzen sind bekannt und zeichnen sich im allgemeinen durch gute mechanische Festigkeiten und eine gute Dimensionsstabilität aus. Beispielsweise werden gemäss DE-OS 1 770 659 Schaumstoffe hergestellt, indem man Epoxidharze bei Zimmertemperatur mit cycloaliphatischen Polyaminen in Gegenwart von mehrwertigen Phenolen als Beschleuniger und eines Treibmittels aushärtet. Die auf diese Weise hergestellten Schaumstoffe weisen eine geringe Druckfestigkeit auf.

Desgleichen erhält man nach dem in der DE-OS 24 43 430 offenbarten Verfahren, nach dem ein bestimmtes Epoxidharzschaumgemisch unter Verwendung einer Lewissäure oder einer Additions- oder Komplexverbindung einer Lewissäure bei Raumtemperatur oder etwas erhöhter Temperatur ausgehärtet wird, Schaumstoffe mit geringen Druckfestigkeiten.

Es wurde nun gefunden, dass man beim Heissverschäumen, d.h., bei Temperaturen über 100 °C, eines Epoxidharzgemisches, enthaltend ein Novolak als Härtungsmittel in einem bestimmten Aequivalenzverhältnis zur Epoxidgruppe und ein Treibmittel, das oberhalb von 100 °C Stickstoff abspaltet, gehärtete Schäume erhält, die vor allem bessere Druckfestigkeiten und Stauchungswerte, inbesondere bei erhöhter Temperatur aufweisen.

Gegenstand vorliegender Erfindung ist somit ein heissverschäumbares, heisshärtbares Epoxidharzgemisch, bestehend aus

(a) einem Epoxidharz oder eine Mischung von Epoxidharzen mit einem durchschnittlichen Epoxidgehalt von 4,4 bis 5,0 Aequivalenten/kg und einer durchschnittlichen Epoxidfunktionalität von grösser als 2,0,

(b) einem Novolak mit einem Hydroxyläquivalentgewicht von 90 bis 120, wobei im Epoxidharzgemisch pro 1 Epoxidäquivalent der Komponente (a) 0,8 bis 0,95 Hydroxyläquivalente der Komponente (b) vorliegen,

(c) 0,1 bis 1 Gew.%, bezogen auf die Menge der Komponenten (a) und (b), eines Härtungsbeschleunigers,

(d) 0,5 bis 10 Gew.%, bezogen auf die Menge der Komponenten (a) und (b) eines Treibmittels, das oberhalb von 100 °C unter Zersetzung Stickstoff abspaltet,

(e) 0,3 bis 1 Gew.%, bezogen auf die gesamte Menge des Epoxidharzgemisches, eines Emulgators und gegebenenfalls

(f) Schaumstoffmodifikatoren.

Vorzugsweise enthält das erfindungsgemässe heissverschäumbare Epoxidharzgemisch ein Epoxidharz oder eine Epoxidharzmischung (a) mit einem durchschnittlichen Epoxidgehalt von 4,6 bis 5,0 Aequivalenten/kg, ein Novolak (b) mit einem Hydroxyläquivalentgewicht von 115 bis 120 und ein Härtungsbeschleuniger (c) in Mengen von 0,3 bis 1 Gew.%, bezogen auf die Menge der Komponenten (a) und (b).

Die in dem erfindungsgemässen Epoxidharzgemisch als Komponente (a) enthaltenen Epoxidharze oder Mischungen von Epoxidharzen sind bekannt und zum Teil im Handel erhältlich. Als Beispiele von solchen Harzen oder Harzgemischen seien genannt: Polyglycidylester von Polycarbonsäuren, wie Trimellitsäuren, Trimesinsäure oder Pyromellitsäure, oder von Mischungen aus Polycarbonsäuren mit Dicarbonsäuren, wie Phthalsäure oder Terephthalsäure; Poly(N-glycidyl)-verbindungen von Diaminen, wie m-Xylylendiamin, Bis-(4-aminophenyl)-methan oder Bis-(3-methyl-4-aminophenyl)-methan oder von Mischungen aus Diaminen mit Monoaminen, wie Anilin; Glycidyläther von mehrkernigen Phenolen, wie Novolaken, die sich bekanntlich aus Aldehyden, wie Formaldehyd, Acetaldehyd, Chloral oder Furfurylaldehyd, und Phenolen, wie Phenol oder am Ring durch Chloratome oder Alkylgruppen mit bis zu 9 C-Atomen substituiertes Phenol, wie 4-Chlorphenol, 2-Methylphenol oder 4-tert.-Butylphenol, ableiten, sowie Glycidyläther von Mischungen aus mehrkernigen Phenolen und ein- oder zweikernigen Phenolen, wie Resorcin, Hydrochinon, Bis-(4-hydroxyphenyl)-methan, 4,4'-Dihydroxydiphenyl, Bis-(4-hydroxyphenyl)-sulfon, 1,1,2,2-Tetrakis-(4-hydroxyphenyl)-äthan, 2,2-Bis-(4-hydroxyphenyl)-propan oder 2,2-Bis-(3,5-dibrom-4-hydroxyphenyl)-propan.

Ferner können im erfindungsgemässen Gemisch als Komponente (a) Triglycidylisocyanurat oder Epoxidharze enthalten sein, bei denen die Glycidylgruppen an verschiedene Heteroatome gebunden sind, wie beispielsweise das N,N,O-Triglycidylderivat von 4-Aminophenol.

Vorzugsweise enthält das erfindungsgemässe Gemisch als Komponente (a) einen oder mehrere aromatische Glycidyläther, insbesondere einen Kresolnovolakglycidyläther oder ein Gemisch aus einem Kresolnovolakglycidyläther und einem Bisphenol A-diglycidyläther.

Die im erfindungsgemässen Gemisch als Komponente (b) enthaltenen Novolake stellen ebenfalls bekannte, zum Teil im Handel erhältliche Verbindungen dar und sind Kondensationsprodukte, hergestellt aus einem Phenol, wie beispielsweise Phenol selbst, oder alkyl-, alkoxy-oder halogensubstituiertes Phenol, und einem Aldehyd, wie beispielsweise Formaldehyd, Acetaldehyd, Chloral oder Furfurylaldehyd. Solche Novolake entsprechen der allgemeinen Formel I

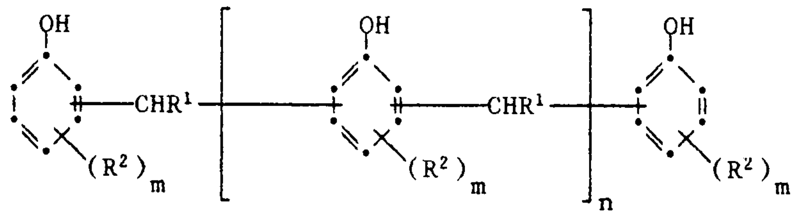

(I)

worin

- $R^1$ ein Wasserstoffatom, Alkyl, Aryl oder einen Heterocyclus bedeutet,,
- $R^2$ ein Halogenatom, Alkyl oder Alkoxy bedeutet,
- m für Null oder eine Zahl von 1 bis 3 steht und
- n eine solche Zahl darstellt, dass das Novolak ein Hydroxyläquivalentgewicht von 90 bis 120, vorzugsweise von 115 bis 120, aufweist.

Bevorzugte Novolake sind solche der Formel I, worin $R^1$ eine Wasserstoffatom bedeutet, $R^2$ ein Alkyl mit 1 bis 4 C-Atomen bedeutet und m für Null oder die Zahl 1 steht. Insbesondere enthalten die erfindungsgemässen Gemische als Komponente (b) ein Kresolnovolak.

Als Härtungsbeschleuniger (c) können für das erfindungsgemässe Gemisch die üblichen, bei der Härtung eines Epoxidharzes mit einem Novolak einsetzbaren Beschleuniger verwendet werden, wie beispielsweise Dicyandiamid, tertiäre Amine, wie Tri-n-butylamin, Tri-isobutylamin, Benzyldimethylamin, Tri-n-propylamin, Tri-(hexyl)-amin oder 2,4,6-Tris-(dimethylaminomethyl)-phenol, quaternäre Ammoniumverbindungen, wie Tetramethylammoniumchlorid, Benzyltrimethylammoniumhydroxid oder Benzyltrimethylammoniumchlorid, m-Phenylendiamin, Hexamethylentetramin, Imidazol oder Imidazolderivate, wie beispielsweise 2-Methylimidazol, 2-Aethylimidazol, 2-Aethyl-4-methylimidazol, 2-Phenylimidazol oder Benzimidazol. Vorzugsweise ist im erfindungsgemässen Gemisch als Härtungsbeschleuniger ein Imidazol oder ein Imidazolderivat, insbesondere 2-Aethylimidazol, enthalten.

Als Treibmittel (d) können für das erfindungsgemässe Gemisch Stoffe eingesetzt werden, die beim Erhitzen des Gemisches auf über 100 °C unter Zersetzung Stickstoff abspalten, wie beispielsweise Azoverbindungen, wie Azoisobutyronitril, oder Hydrazide, wie p-Toluolsulfohydrazid (Genitron PTS®). Vorzugsweise enthalten die erfindungsgemässen Gemische als Treibmittel p-Toluolsulfohydrazid.

Die im erfindungsgemässen Gemisch enthaltenen Emulgatoren (e) sind oberflächenakitve Mittel, die als Porenregler wirken. Sie haben die Aufgabe, den aus dem Treibmittel entstehenden Stickstoff in regelmässigen Blasen über den ganzen Schaumstoff zu verteilen, damit ein Schaumstoff mit weitgehender Geschlossenzelligkeit erhalten wird. Zur Regelung der Porenstruktur eignen sich vorzugsweise nichtionogene Stoffe, wie beispielsweise hydroxylgruppenhaltige Ester von Fettsäuren, wie Laurin-, Palmitin-, Stearin- oder Oleinsäure, mit mehrwertigen Alkoholen, wie Sorbit, und deren Additionsprodukte mit Polyoxyäthylen an die freien Hydroxylgruppen ("Tweens"), z.B. Polyoxyäthylensorbitanmonolaurat oder -monostearat, ferner Polyoxyglykole ("Pluronics"). Als gute Porenregler sind die Siliconöle bekannt, wie sie beispielsweise unter der Handelsbezeichnung Rhodorsil® von der Firma Rhône-Poulenc im Handel erhältlich sind. Insbesondere enthält das erfindungsgemässe Gemisch als Emulgator ein Polyäther-polymethylsiloxan-copolymer (Tegopren® 5851 der Firma Goldschmidt).

Gegebenenfalls kann das erfindungsgemässe Gemisch noch übliche Schaumstoffmodifikatoren enthalten, das heisst, Stoffe, welche die Viskosität des erfindungsgemässen Gemisches bei der Verarbeitung herabsetzen, den Fliessgrad des Schaumes verbessern oder als Lösungsmittel für Zusatzstoffe dienen können. Die Schaumstoffmodifikatoren können dabei reaktiv sein, das heisst, mit einer Schaumstoffkomponente reagieren, oder nichtreaktiv sein. Zur Verbesserung des Fliessgrades des Schaumes kann man als reaktiven Modifikator beispielsweise Nonylphenol und als nichtreaktiven Modifikator beispielsweise Aethylhexylphthalat dem erfindungsgemässen Gemisch zusetzen. Sie werden zweckmässig in Mengen von 0,5 bis 10 Gew.-%, bezogen auf die Menge der Komponenten (a) und (b), eingesetzt.

Weiterhin können dem erfindungsgemässen Gemisch Farbstoffe, Füllstoffe, Weichmacher oder Flammschutzmittel zugesetzt werden, z.B. $Al_2O_3 \cdot 3\,H_2O$, Polyäthylen, Polypropylen, Polyvinylchlorid.

Das erfindungsgemässe Gemisch kann von Hand oder mittels einer geeigneten Maschine zu Schaumstoffen verarbeitet werden, indem man das Gemisch im Temperaturbereich von 120 bis 180 °C verschäumt und aushärtet. Das erfindungsgemässe Gemisch eignet sich vorteilhaft für die maschinelle Herstellung eines Schaumstoffes, beispielswiese mittels der RIM-Maschine (reactive injection moulding machine), da sich die Viskosität des erfindungsgemässen Gemisches während des Lagerns bei erhöhter Temperatur nicht stark verändert und beim Härten des Schaumes in der geschlossenen Form keine starke Exothermieentwicklung auftritt, so dass die Schaumbildung nicht gestört wird und ein Schaumstoff mit einem hohen Grad an Geschlossenzelligkeit erhalten wird. Bei der maschinellen Verarbeitung des erfindungsgemässen Gemisches zu gehärteten Schaumstoffen können Taktzeiten von 10 bis 20 Minuten erreicht werden.

Gegenstand vorliegender Erfindung ist somit auch die Verwendung des erfindungsgemässen Gemisches für die maschinelle Herstellung eines Schaumstoffes sowie ein Verfahren zur Herstellung von vernetzten, unlöslichen und unschmelzbaren Epoxidharzschaumstoffen durch Verschäumen und Aushärten des erfindungsgemässen Gemisches im Temperaturbereich von 120 bis 180 °C, vorzugsweise von 130 bis 160 °C.

Die aus den erfindungsgemässen Gemisch hergestellten Schaumstoffe zeichnen sich durch eine homogene Porenstruktur und einen hohen Grad an Geschlossenzelligkeit aus. Die Schaumstoffe weisen ausserdem eine gute Dauerwärmebeständigkeit und eine gute Druckfestigkeit auch bei erhöhter Temperatur auf. Die aus dem erfindungsgemässen Gemisch erhaltenen Schaumstoffe eignen sich daher insbesondere als Isolierstoffe gegen Wärmeverlust sowie gegen Druck und Stoss.

In den folgenden Beispielen werden Schaumstoffe unter Verwendung einer Giessform hergestellt. Diese hat die Innenmasse 250x250x30 mm und besteht aus zwei äusseren elektrisch beheizbaren Metallplatten (20 mm), die durch einen ungeheizten Distanzrahmen 30 mm voneinander getrennt sind. Der Distanzrahmen lässt sich einseitig öffnen, damit die aktivierte Schaummischung eingegossen werden kann. Die heizbaren Aussenplatten und der metallene Distanzrahmen werden durch vier Schraubenzwingen während des Aushärtens der Schaumstoffplatte zusammengehalten. Die Platten werden aufrechtstehend gegossen, dazu wird die obenstehende Schraubzwinge entfernt und 1/4 des Distanzrahmens entfernt. Nach erfolgtem Eingiessen der aktivierten Schaummischung wird der entfernte Teil des Distanzrahmens eingelegt und die Schraubzwinge verschlossen. Die noch heissen Platten und der heisse Distanzrahmen werden für eine bessere Entformung mit OP-Wachs oder einem silikonhaltigen Trennmittel eingestrichen.

Beispiel 1: Ein Schaumstoff wird unter Verwendung der folgenden Verbindungen hergestellt:

| | |
|---|---|
| Bisphenol A-diglycidyläther (flüssig, Epoxidäquivalentgewicht 185) | 276,8 g (1,5 Aeq.) |
| Kresolnovolakglycidyläther (fest, Epoxidäquivalentgewicht 230) | 276,8 g (1,2 Aeq.) |
| Kresolnovolak (fest, Hydroxyläquivalentgewicht 115) | 287,2 g (2,5 Aeq.) |
| Polyäther-polymethylsiloxan-copolymer (Emulgator) | 6,2 g |
| 2-Aethylimidazol (Beschleuniger) | 4,5 g |
| p-Toluolsulfohydrazid (Treibmittel) | 7,0 g |

Der Bisphenol-A-diglycidäther (BPAD) wird in einem Becherglas, welches in einem auf 170 °C beheizten Oelbad steht, versehen mit einem schnelldrehenden Rührer, auf etwa 145 °C erhitzt. Bei dieser Temperatur wird portionenweise der Kresolnovolakglycidyläther (KNG) zum BPAD zugestreut, sobald KNG in Lösung gegangen ist, wird der Kresolnovolak in kleinen Portionen eingegeben. Nachdem alles in Lösung gegangen ist und die Matrix eine Temperatur von etwa 145 °C erreicht hat, gibt man unter Rühren das Polyäther-polymethylsiloxancopolymer zu. Das Becherglass mit der heissen Harz-Härter-Mischung wird aus dem Oelbad genommen und innerhalb von 20 - 30 Sekunden werden 2-Aethyl-imidazol und p-Toluolsulfohydrazid homogen eingerüht. Innerhalb von weiteren 20 Sekunden wird die aktivierte Schaummischung in die auf 130 - 140 °C geheizte Giessform eingegossen. In weiteren 20 Sekunden wird die Giessform mit Schraubzwingen verschlossen. Der Druckanstieg in der verschlossenen Giessform erfolgt nach 1 - 5 Minuten. Nach 10 - 20 Minuten wird die Form geöffnet und es wird eine Platte der noch heissen Form entnommen. Die abgekühlte Schaumstoffplatte wird mit einer Kreissäge in die gewünschten Prüfkörper zerlegt. Es werden ausschliesslich Testkörper ohne Deckschichten geprüft. Die Eigenschaften des erhaltenen Schaumstoffes sind in Tabelle I angegeben.

Beispiel 2: Beispiel 1 wird wiederholt, wobei der Harz-Härter-Mischung nun 11,8 g p-Toluolsulfohydrazid zugesetzt werden. Härtungsbedingung: 20 Min./140 °C. Die Eigenschaften des erhaltenen Schaumstoffes sind in Tabelle I angegeben.

Beispiel 3: Es wird wie in Beispiel 1 ein Schaumstoff unter Verwendung der folgenden Verbindungen hergestellt:

| | |
|---|---|
| Bisphenol A-diglycidyläther (flüssig, Epoxidäquivalentgewicht 185) | 166,1 g (0,9 Aeq.) |
| Kresolnovolakglycidyläther (fest, Epoxidäquivalentgewicht 230) | 166,1 g (0,7 Aeq.) |
| Kresolnovolak (fest, Hydroxyläquivalentgewicht 115) | 172,3 g (1,5 Aeq.) |
| Polyäther-polymethylsiloxan-copolymer | 3,6 g |
| 2-Aethylimidazol | 3,3 g |
| p-Toluolsulfohydrazid | 10,0 g |

Härtungsbedingung: 20 Min/145 °C. Die Eigenschaften des erhaltenen Schaumstoffes sind in Tabelle I angegeben.

Beispiel 4: Es wird wie in Beispiel 1 ein Schaumstoff unter Verwendung der folgenden Verbindungen hergestellt:

| | |
|---|---|
| Bisphenol A-diglycidyläther (flüssig, Epoxidäquivalentgewicht 185) | 92,3 g (0,5 Aeq.) |
| Kresolnovolakglycidyläther (fest, Epoxidäquivalentgewicht 230) | 92,3 g (0,4 Aeq.) |
| Kresolnovolak (fest, Hydroxyläquivalentgewicht 115) | 95,7 g (0,8 Aeq.) |
| Polyäther-polymethylsiloxan-copolymer | 2,0 g |
| 2-Aethylimidazol | 1,8 g |
| p-Toluolsulfohydrazid | 13,0 g |

Härtungsbedingung: 15 Min/145 °C. Die Eigenschaften des erhaltenen Schaumstoffes sind in Tabelle I angegeben.

Beispiel 5 Beispiel 1 wird wiederholt, wobei anstelle von 287,2 g nun 257,2 g (2,2 Aeq.) festes Kresolnovolak mit einem Hydroxyläquivalentgewicht von 115 eingesetzt werden. Härtungsbedingung: 15 Min/145 °C. Die Eigenschaften des erhaltenen Schaumstoffes sind in Tabelle I angegeben.

Beispiel 6: Es wird wie in Beispiel 1 ein Schaumstoff unter Verwendung der folgenden Verbindungen hergestellt:

| | |
|---|---|
| Bisphenol A-diglycidyläther (flüssig, Epoxidäquivalentgewicht 185) | 276,8 g (1,5 Aeq.) |
| Kresolnovolakglycidyläther (fest, Epoxidäquivalentgewicht 230) | 276,8 g (1,2 Aeq.) |
| Kresolnovolak (fest, Hydroxyläquivalentgewicht 115) | 257,2 g (2,2 Aeq.) |
| Polyäther-polymethylsiloxan-copolymer | 6,2 g |
| 2-Aethylimidazol | 7,5 g |
| p-Toluolsulfohydrazid | 7,0 g |
| Nonylphenol | 30,0 g |

Härtungsbedingung: 15 Min/135 °C. Die Eigenschaften des erhaltenen Schaumfstoffes sind in Tabelle I und II angegeben.

Beispiel 7: Beispiel 6 wird wiederholt, wobei anstelle von 30,0 g nun 60,0 g Nonylphenol eingesetzt werden. Härtungsbedingung: 15 Min/135 °C. Die Eigenschaften des erhaltenen Schaumstoffes sind in Tabelle I angegeben.

Beispiel 8: Beispiel 6 wird wiederholt, wobei anstelle von 30,0 g nun 75 g Nonylphenol eingesetzt werden. Härtungsbedingungen: 15 Min/135 °C. Die Eigenschaften des erhaltenen Schaumstoffes werden in Tabelle I angegeben.

Beispiel 9: Es wird wie in Beispiel 1 ein Schaumstoff unter Verwendung der folgenden Verbindungen hergestellt:

| | |
|---|---|
| Bisphenol A-diglycidyläther (flüssig, Epoxidäquivalentgewicht 185) | 221,5 g (1,2 Aeq.) |
| Kresolnovolakglycidyläther (fest, Epoxidäquivalentgewicht 230) | 332,2 g (1,4 Aeq.) |
| Kresolnovolak (fest, Hydroxyläquivalentgewicht 115) | 250,5 g (2,2 Aeq.) |
| Polyäther-polymethylsiloxan-copolymer | 6,0 g |
| 2-Aethylimidazol | 7,5 g |
| p-Toluolsulfohydrazid | 6,8 g |
| Nonylphenol | 30,0 g |

Härtungsbedingung: 15 Min/135 °C. Die Eigenschaften des erhaltenen Schaumstoffes sind in Tabelle I und II angegeben.

Beispiel 10: Es wird wie in Beispiel 1 ein Schaumstoff unter Verwendung der folgenden Verbindungen hergestellt:

| | |
|---|---|
| Bisphenol A-diglycidyläther (flüssig, Epoxidäquivalentgewicht 185) | 166,1 g (0,9 Aeq.) |
| Kresolnovolakglycidyläther (fest, Epoxidäquivalentgewicht 230) | 387,5 g (1,7 Aeq.) |
| Kresolnovolak (fest, Hydroxyläquivalentgewicht 115) | 246,7 g (2,15 Aeq.) |
| Polyäther-polymethylsiloxan-copolymer | 6,0 g |
| 2-Aethylimidazol | 7,5 g |
| p-Toluolsulfohydrazid | 6,8 g |
| Nonylphenol | 30,0 g |

Härtungsbedingung: 15 Min/140 °C. Die Eigenschaften des erhaltenen Schaumstoffes sind in Tabelle I angegeben.

Beispiel 11: Es wird wie in Beispiel 1 ein Schaumstoff unter Verwendung der folgenden Verbindungen hergestellt:

| | |
|---|---|
| Bisphenol A-diglycidyläther (flüssig, Epoxidäquivalentgewicht 185) | 110,7 g (0,6 Aeq.) |
| Kresolnovolakglycidyläther (fest, Epoxidäquivalentgewicht 230) | 442,9 g (1,9 Aeq.) |
| Kresolnovolak (fest, Hydroxyläquivalentgewicht 115) | 240,1 g (2,1 Aeq.) |
| Polyäther-polymethylsiloxan-copolymer | 6,0 g |
| 2-Aethylimidazol | 7,5 g |
| p-Toluolsulfohydrazid | 6,8 g |
| Nonylphenol | 30,0 g |

Härtungsbedingung: 15 Min/140 °C. Die Eigenschaften des erhaltenen Schaumstoffes sind in Tabelle I angegeben.

Beispiel 12: Beispiel 1 wird wiederholt, wobei anstelle von 4,5 g nun 5,5 g 2-Aethylimidazol eingesetzt werden. Härtungsbedingung: 15 Min/140 °C. Die Eigenschaften des erhaltenen schaumstoffes sind in Tabelle I angegeben.

Beispiel 13: Beispiel 1 wird wiederholt, wobei anstelle von 4,5 g nun 6,5 g 2-Aethylimidazol eingesetzt werden. Härtungsbedingung: 15 Min/140 °C. Die Eigenschaften des erhaltenen Schaumstoffes sind in Tabelle I angegeben.

Tabelle I: Eigenschaften der Schaumstoffe

| Schaumstoff gemäss Beispiel | 1 | 2 | 3 | 4 | 5 | 6 | 7 | 8 | 9 | 10 | 11 | 12 | 13 |
|---|---|---|---|---|---|---|---|---|---|---|---|---|---|
| Dichte [g/cm³] | 0,38 | 0,3 | 0,2 | 0,1 | 0,38 | 0,37 | 0,38 | 0,38 | 0,38 | 0,39 | 0,38 | 0,38 | 0,39 |
| Geschlossenzelligkeit*) [%] | 86 | 93 | 93 | 92 | 86 | 92 | 92 | 92 | | | | 92 | 94 |
| Biegefestigkeit nach DIN 53423 [N/mm²] | 9,1 | 5,2 | 4,2 | 1,8 | 8,6 | 8,2 | 8,1 | 7,8 | | | | 9,1 | 8,1 |
| E-Modul nach DIN 53423 bei 23°C [N/mm²] | 275 | 171 | 111 | 35 | 282 | 308 | 322 | 342 | | | | 281 | 278 |
| Durchbiegung nach DIN 53423 [mm] | 2,5 | 2,6 | 4,2 | 4,7 | 2,3 | 1,9 | 1,8 | 1,6 | | | | 2,6 | 2,3 |
| Druckfestigkeit nach DIN 53421-A [N/mm²] | 13,1 | 7,4 | 3,9 | 1,3 | 13,5 | 14,0 | 14,8 | 14,4 | 12,7 | 12,7 | 9,4 | 13,6 | 14,0 |
| Stauchung nach DIN 53421-A [%] | 11,4 | 2,2 | 1,8 | 1,1 | 11,9 | 11,5 | 11,5 | 10,0 | 17,3 | 16,4 | 14,6 | 12,7 | 12,0 |

*) Die Gechlossenzelligkeit wurde mit dem "Air-Comparison Pycnometer", Beckmann Model 930, gemessen und gibt das wahre Volumen zum errechneten Volumen in Prozenten an.

Tabelle II: Eigenschaften der Schaumstoffe bei erhöhter Temperatur

| Schaumstoff gemäss Beispiel | 6 | 9 |
|---|---|---|
| Druckfestigkeit (DIN 53 421-A) bei 23°C [N/mm²] | 12,7 | 12,6 |
| Stauchung (DIN 53 421-A) bei 23°C [%] | 16,6 | 17,4 |
| Druckfestigkeit bei 80°C [N/mm²] | 9,4 | 8,9 |
| Stauchung bei 80°C [%] | 14,8 | 11,4 |
| Druckfestigkeit bei 100°C [N/mm²] | 7,3 | 8,3 |
| Stauchung bei 100°C [%] | 14,8 | 12,8 |
| Druckfestigkeit bei 120°C [N/mm²] | 5,3 | 7,1 |
| Stauchung bei 120°C [%] | 14,7 | 15,2 |

Beispiel 14: Es wird wie in Beispiel 1 gearbeitet, jedoch werden anstelle von p-Toluolsulfohydrazid nun 7,6 g Azo-isobutyronitril und anstelle von Polyäther-polymethylsiloxancopolymer nun 6,0 g Siliconöl (Rhodorsil® 3139) eingesetzt. Die Schaummatrix wird bei 105 °C in die auf 140 °C beheizte Form eingegossen. Härtungsbedinung: 15 Minuten bei 140 °C. Der gehärtete Schaum weist folgende Eigenschaften auf:
Dichte = 0,36 g/cm³
Geschlossenzelligkeit = 94,0 %.

Beispiel 15: Es wird wie in Beispiel 1 gearbeitet, wobei folgende Verbindungen zur Herstellung des Schaumstoffes eingesetzt werden:

| | |
|---|---|
| Bisphenol-A-diglycidyläther (hochviskos, Epoxidäquivalentgewicht 222) | 574,0 g (2,58 Aeq.) |
| Kresolnovolak (fest, Hydroxyläquivalentgewicht 115) | 266,0 g (2,31 Aeq.) |
| Polyäther-polymethylsiloxan-copolymer | 6,0 g |
| 2-Aethylimidazol | 7,5 g |
| p-Toluolsulfohydrazid | 7,5 g |

Härtungsbedingung: 15 Minuten bei 140 °C. Der gehärtete Schaumstoff weist eine Dichte von 0,39 g/cm³ auf.

**Patentansprüche**

**1.** Heissverschäumbares, heisshärtbares Epoxidharzgemisch, bestehend aus
(a) einem Epoxidharz oder eine Mischung von Epoxidharzen mit einem durchschnittlichen Epoxidgehalt von 4,4 bis 5,0 Aequivalenten/kg und einer durchschnittlichen Epoxidfunktionalität von grösser als 2,0,
(b) einem Novolak mit einem Hydroxyläquivalentgewicht von 90 bis 120, wobei im Epoxidharzgemisch pro 1 Epoxidäquivalent der Komponente (a) 0,8 bis 0,95 Hydroxyläquivalente der Komponente (b) vorliegen,
(c) 0,1 bis 1 Gew.%, bezogen auf die Menge der Komponenten (a) und (b), eines Härtungsbeschleunigers,
(d) 0,5 bis 10 Gew.%, bezogen auf die Menge der Komponenten (a) und (b), eines Treibmittels, das oberhalb von 100 °C unter Zersetzung Stickstoff abspaltet,
(e) 0,3 bis 1 Gew.%, bezogen auf die gesamte Menge des Epoxidharzgemisches, eines Emulgators und gegebenenfalls

(f) Schaumstoffmodifikatoren.

**2.** Epoxidharzgemisch gemäss Anspruch 1, enthaltend ein Epoxidharz oder eine Epoxidharzmischung mit einem durchschnittlichen Epoxidgehalt von 4,6 bis 5,0 Aequivalenten/kg, ein Novolak (b) mit einem Hydroxyläquivalentgewicht von 115 bis 120 und einen Härtungsbeschleuniger (c) in Mengen von 0,3 bis 1 Gew.%, bezogen auf die Menge der Komponenten (a) und (b).

**3.** Epoxidharzgemisch gemäss Anspruch 1, enthaltend als Komponente (a) einen oder mehrere aromatische Glycidyläther.

**4.** Epoxidharzgemisch gemäss Anspruch 1, enthaltend als Komponente (a) einen Kresolnovolakglycidyläther oder ein Gemisch aus einem Kresolnovolakglycidyläther und einem Bisphenol A-diglycidyläther.

**5.** Epoxidharzgemisch gemäss Anspruch 1, enthaltend als Komponente (b) ein Kresolnovolak.

**6.** Epoxidharzgemisch gemäss Anspruch 1, enthaltend als Härtungsbeschleuniger (c) Imidazol oder ein Imidazolderivat.

**7.** Epoxidharzgemisch gemäss Anspruch 6, enthaltend als Härtungsbeschleuniger 2-Aethylimidazol.

**8.** Epoxidharzgemisch gemäss Anspruch 1, enthaltend als Treibmittel (d) p-Toluolsulfohydrazid.

**9.** Epoxidharzgemisch gemäss Anspruch 1, enthaltend als Emulgator (e) nichtionogene Stoffe.

**10.** Verwendung eines Epoxidharzgemisches gemäss Anspruch 1 für die maschinelle Herstellung eines Schaumstoffes.

**11.** Verfahren zur Hestellung von vernetzten, unlöslichen und unschmelzbaren Epoxidharzschaumstoffen, dadurch gekennzeichnet, dass man ein Epoxidharzgemisch gemäss Anspruch 1 im Temperaturbereich von 120 bis 180 °C, vorzugsweise 130 bis 160 °C, verschäumt und aushärtet.

**Claims**

**1.** A hot-foamable, thermosetting epoxy resin mixture comprising
(a) an epoxy resin or a mixture of epoxy resins with an average epoxide content of 4.4 to 5.0 equivalents/kg and an average epoxide functionality of more than 2.0,
(b) a novolak with a hydroxyl equivalent weight of 90 to 120, 0.8 to 0.95 hydroxyl equivalents of component (b) being present in the epoxy resin mixture per 1 epoxide equivalent of component (a),
(c) 0.1 to 1% by weight, based on the amount of components (a) and (b), of a curing accelerator,
(d) 0.5 to 10% by weight, based on the amount of components (a) and (b), of a blowing agent which gives off nitrogen above 100 °C with decomposition,
(e) 0.3 to 1% by weight, based on the total amount of the epoxy resin mixture, of an emulsifier, and if appropriate
(f) foam modifiers.

**2.** An epoxy resin mixture according to claim 1, comprising an epoxy resin or an epoxy resin mixture with an average epoxide content of 4.6 to 5.0 equivalents/kg, a novolak (b) with a hydroxyl equivalent weight of 115 to 120 and a curing accelerator (c) in amounts of 0.3 to 1% by weight, based on the amount of components (a) and (b).

**3.** An epoxy resin mixture according to claim 1, comprising as component (a) one or more aromatic glycidyl ethers.

**4.** An epoxy resin mixture according to claim 1, comprising as component (a) a cresol novolak glycidyl ether or a mixture of a cresol novolak glycidyl ether and a bisphenol A diglycidyl ether.

**5.** An epoxy resin mixture according to claim 1, comprising as component (b) a cresol novolak.

6. An epoxy resin mixture according to claim 1, comprising as curing accelerator (c) imidazole or an imidazole derivative.

7. An epoxy resin mixture according to claim 6, comprising as curing accelerator 2-ethylimidazole.

8. An epoxy resin mixture according to claim 1, comprising as blowing agent (d) p-toluenesulfohydrazide.

9. An epoxy resin mixture according to claim 1, comprising as emulsifier (e) nonionic substances.

10. The use of an epoxy resin mixture according to claim 1 for mechanical production of a foam.

11. A process for the production of crosslinked, insoluble and non-fusible epoxy resin foams, which comprises foaming and curing an epoxy resin mixture according to claim 1 in the temperature range from 120 to 180°C, preferably 130 to 160°C.

**Revendications**

1. Mélange de résine époxyde expansible à chaud, durcissable à chaud, composé :
   (a) d'une résine époxyde ou d'un mélange de résines époxyde ayant une teneur moyenne en époxyde de 4,4 à 5,0 équivalents/kg et une fonctionnalité époxyde moyenne supérieure à 2,0,
   (b) d'une Novolaque ayant un poids équivalent d'hydroxyle de 90 à 120, étant précisé que dans le mélange de résines époxyde pour un équivalent d'époxyde du composant (a), le composant (b) est présent en une quantité de 0,8 à 0,95 équivalent d'hydroxyle,
   (c) de 0,1 a 1 % en poids par rapport à la quantité des composants (a) et (b), d'un accélérateur de durcissement
   (d) de 0,5 à 10% en poids par rapport à la quantité des composants (a) et (b), d'un porogène qui dégage de l'azote en se décomposant a une température supérieure à 100 °C,
   (e) de 0,3 à 1% en poids par rapport à la quantité totale du mélange de résine époxyde, d'un émulsionnant et, éventuellement,
   (f) d'agents modificateurs de mousse.

2. Mélange de résine époxyde selon la revendication 1, contenant une résine époxyde ou un mélange de résines époxyde, ayant une teneur moyenne en époxyde de 4,6 à 5,0 équivalents/kg, une Novolaque (b) ayant un poids équivalent d'hydroxyle de 115 à 120 et un accélérateur de durcissement (c) dans des quantités de 0,3 à 1% en poids par rapport à la quantité des composants (a) et (b).

3. Mélange de résine époxyde selon la revendication 1, contenant en tant que composant (a) un ou plusieurs éthers glycidyliques aromatiques.

4. Mélange de résine époxyde selon la revendication 1, contenant en tant que composant (a) un crésol-novolaque-éther glycidylique ou un mélange d'un crésol-novolaque-éther glycidylique et d'un éther diglycidylique d'un bisphénol A.

5. Mélange de résine époxyde selon la revendication 1, contenant en tant que composant (b) un crésol-novolaque.

6. Mélange de résine époxyde selon la revendication 1, contenant en tant qu'accélérateur de durcissement (c) de l'imidazole ou un dérive d'imidazole.

7. Mélange de résine époxyde selon la revendication 6, contenant en tant qu'accélérateur de durcissement le 2-éthylimidazole.

8. Mélange de résine époxyde selon la revendication 1, contenant en tant que porogène (d) le p-toluènesulfohydrazide.

9. Mélange de résine époxyde selon la revendication 1, contenant en tant qu'émulsionnant (e) des matières non ionogènes.

**10.** Utilisation d'un mélange de résine époxyde selon la revendication 1, pour la préparation d'une matière expansée à l'aide de machines.

**11.** Procédé pour la préparation de matières de résine époxyde expansées, réticulées, insolubles et non fusibles, caractérisé en ce qu'on fait mousser et durcir un mélange de résine époxyde selon la revendication 1, dans le domaine de températures de 120 à 180 °C, de préférence de 130 à 160 °C.